# EUROPEAN PATENT SPECIFICATION

(11) **EP 3 524 956 B1**
(45) Date of publication and mention of the grant of the patent: **07.10.2020**
(21) Application number: 19153677.0
(22) Date of filing: 25.01.2019
(51) Int. Cl.: G01M 13/025, G01L 5/00, G01L 3/14

(54) **TORQUE ADAPTER**
DREHMOMENTADAPTER
ADAPTATEUR DE COUPLE

(30) Priority: 02.02.2018 US 201815887022
(43) Date of publication of application: 14.08.2019
(73) Proprietor: TTI (Macao Commercial Offshore) Limited, Macao (MO)
(72) Inventor: Brue, Michael S, Anderson, SC South Carolina 29626 (US); Moylan, Julia H, Anderson, SC South Carolina 29621 (US)
(74) Representative: Stevenson-Hill, Jack Patrick

(56) References cited:
- GB-A- 2 310 291
- JP-A- S63 204 132

## Description

### FIELD OF THE INVENTION

The present invention relates to devices for measuring a maximum torque supplied by a rotary power source, and more particularly to a torque adapter useful to more accurately measure the stall torque of a rotary power tool.

### BACKGROUND OF THE INVENTION

Rotary power tools are typically capable of supplying a maximum torque when the rotational output is stalled. The maximum torque that a given rotary power tool can supply is subject to internal resistive forces, such as the frictional resistance of an electric motor and the frictional resistance of a drivetrain assembly.

GB 2,310,291 relates to a torque measuring coupling device. According to the abstract of this document, there is provided a driving shaft and a driven shaft which are connected to discs. Tension springs are connected between the discs so that torque is transferred via springs resulting in measureable angular displacement between the shafts. The discs are formed with alternately arranged circular holes and arcuate slots, so that the circular holes in one plate overlie the arcuate slots in the other, and each circular hole bears a post which protrudes through the arcuate slot with which its circular hole is aligned. A further disc is provided with holes and slots. The springs are coupled between the protruding ends of adjacent posts. The angular displacement between the two shafts may be measured by means of a scale and a pointer, or by stroboscopic means or by a ratchet.

### SUMMARY OF THE INVENTION

The present invention provides, in one aspect, a torque adapter for measuring a stall torque supplied by a rotary power source. The torque adapter includes a housing, a mandrel rotatable relative to the housing, and a resistance subassembly. The housing includes an arcuate recess defined at least partially by a recess front wall a recess back wall. The arcuate recess includes a first rotational zone bounded on one side by the recess back wall, and a second rotational zone bounded on an opposite side from the first rotational zone by the recess front wall. The mandrel includes a flange portion having an arcuate protrusion received in the arcuate recess. The resistance subassembly includes a biasing member and is received into the arcuate recess. When the mandrel is rotated relative to the housing, the mandrel encounters nominal rotational resistance while the arcuate protrusion passes through the first rotational zone, and the mandrel encounters increasing rotational resistance while the arcuate protrusion passes through the second rotational zone.

The arcuate recess may extend at least partially about a circumference of a circle, and the arcuate protrusion may extend at least partially about a circumference of a circle.

The housing may further include an intermediate wall disposed in the arcuate recess between the recess front wall and the recess back wall.

The arcuate protrusion may include a narrow portion and the intermediate wall may include a slot that permits the narrow portion to pass by the intermediate wall when the mandrel is rotated relative to the housing.

The intermediate wall may divide the first rotational zone from the second rotational zone, and the resistance subassembly may be disposed in the second rotational zone.

The resistance subassembly may include a slider having a slider front wall, and when the arcuate protrusion is located in the first rotational zone, the slider front wall may abut the intermediate wall.

The biasing member may bias the slider toward the recess back wall.

The slider may include a first arcuate sidewall and a second arcuate sidewall, and the biasing member may reside at least partially within a cavity defined by the first and second arcuate sidewalls and the slider front wall.

The resistance subassembly may cause the increasing rotational resistance by exerting an increasing resistive force against the arcuate protrusion when the arcuate protrusion passes through the second rotational zone.

The arcuate protrusion may include a protrusion front wall and a protrusion back wall, and wherein when the arcuate protrusion passes through the first rotational zone from a starting orientation at which the protrusion back wall abuts the recess back wall, the mandrel may rotate at least fifteen degrees relative to the housing before contact with the resistance subassembly, and when the arcuate protrusion passes through the second rotational zone, the mandrel may be capable of rotating a maximum of at least fifteen degrees relative to the housing while encountering increasing rotational resistance provided by the resistance subassembly.

The housing may further include a first connector disposed in the housing and may be operable to mate with a corresponding second connector on a torque transducer to rotationally lock the housing to the torque transducer, and optionally the housing may further include an adapter configured to adapt the size of the first connector to the size of the second connector.

The arcuate recess may be a first arcuate recess, the recess front wall may be a first recess front wall, and the recess back wall may be a first recess back wall, and the arcuate protrusion may be a first arcuate protrusion having a first protrusion front wall and a first protrusion back wall.

The housing may further include a second arcuate recess having a second recess front wall and a second recess back wall, and the mandrel further may include a second arcuate protrusion positioned in the second arcuate recess, the second arcuate protrusion having a second protrusion front wall and a second protrusion back wall.

The mandrel may be configurable in a starting orientation relative to the housing, and wherein in the starting orientation, the first protrusion back wall may abut the first recess back wall, and the second protrusion back wall may abut the second recess back wall.

The mandrel may be further configurable in a stalled orientation relative to the housing, and wherein in the stalled orientation, a rotational resistance caused by a resistive force exerted by the biasing member may be equal to the stall torque supplied by the rotary power source, such that the second protrusion front wall does not contact the second recess front wall.

A rotational resistance caused by a resistive force exerted by the biasing member may be less than the stall torque supplied by the rotary power source, such that the second protrusion front wall contacts and abuts the second recess front wall. The resistance subassembly may includs a slider having a slider front wall, and the mandrel may be further configurable in an intermediate orientation relative to the housing, wherein in the intermediate orientation, the slider front wall may abut both of the first protrusion front wall and the intermediate wall.

The mandrel may further include a spindle portion adjacent the flange portion, and a hexagonal shank at a distal end of the spindle portion.

The present invention provides, in another aspect, a method of measuring a stall torque supplied by a rotary power source using a torque adapter and a torque transducer. The torque adapter includes a mandrel and a housing. The mandrel is coupled to the rotary power source, and the housing is rotationally fixed to the torque transducer. The method includes a step of activating the rotary power source to supply a torque to the mandrel. Next, the method includes a step of rotating the mandrel relative to the housing through a first rotational zone of nominal rotational resistance. Next, the method includes a step of rotating the mandrel relative to the housing through a second rotational zone of increasing rotational resistance. Next, the method includes a step of stalling rotation of the mandrel when the rotational resistance becomes equal to the torque supplied by the rotary power source. Finally, the method includes a step of measuring the stall torque of the rotary power source with the torque transducer.

Other features and aspects of the invention will become apparent by consideration of the following detailed description and accompanying drawings. Any feature of features described herein in relation to one aspect or embodiment of the invention may be combined with any other feature or features described herein of any other aspect or embodiment of the invention, as appropriate and applicable.

### BRIEF DESCRIPTION OF THE DRAWINGS

FIG. 1 is a schematic view of a torque measurement assembly including a torque adapter in accordance with an embodiment of the invention.
FIG. 2 is a perspective view of the torque adapter of FIG. 1.
FIG. 3 is a side elevation view of the torque adapter of FIG. 1.
FIG. 4 is a cross-sectional view of the torque adapter of FIG. 1 through line 4-4 in FIG. 3.
FIG. 5 is an exploded perspective view of the torque adapter of FIG. 1.
FIG. 6 is another exploded perspective view of the torque adapter of FIG. 1.
FIG. 7 is a cross-sectional view of a housing of the torque adapter of FIG. 1 through line 7-7 of FIG. 3, shown with a first arcuate protrusion in a first, starting orientation.
FIG. 8 is a cross-sectional view of a housing of the torque adapter of FIG. 1 through line 7-7 of FIG. 3, shown with a first arcuate protrusion in a second, intermediate orientation.
FIG. 9 is a cross-sectional view of a housing of the torque adapter of FIG. 1 through line 7-7 of FIG. 3, shown with a first arcuate protrusion in a third, stalled orientation.
FIG. 10 is a cross-sectional view of a housing of the torque adapter of FIG. 1 through line 7-7 of FIG. 3, shown with a first arcuate protrusion in an alternative third, stalled orientation.

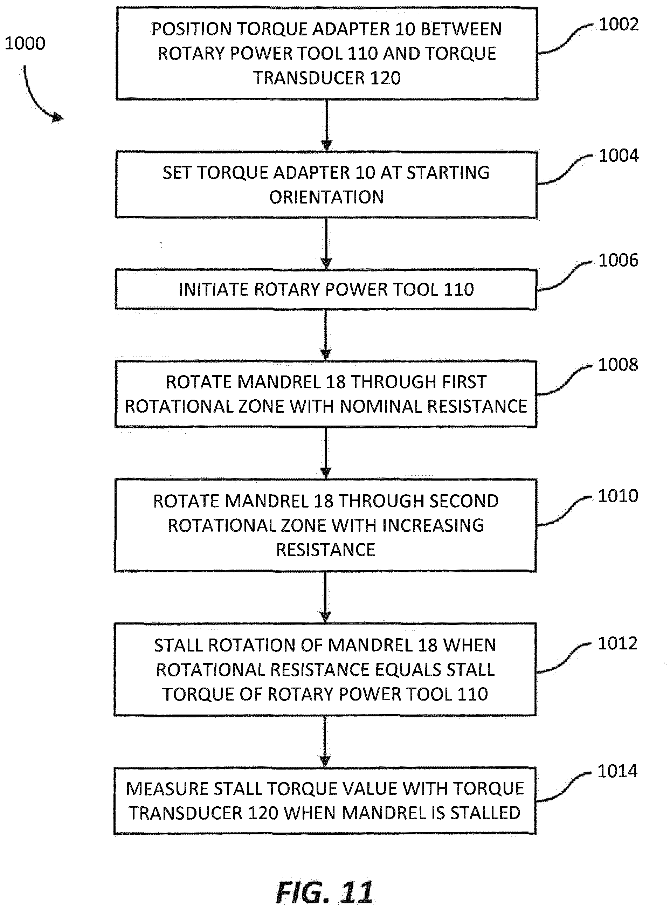

FIG. 11 is a flowchart illustrating a method of measuring a stall torque supplied by a rotary power source while utilizing the torque adapter of FIG. 1.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

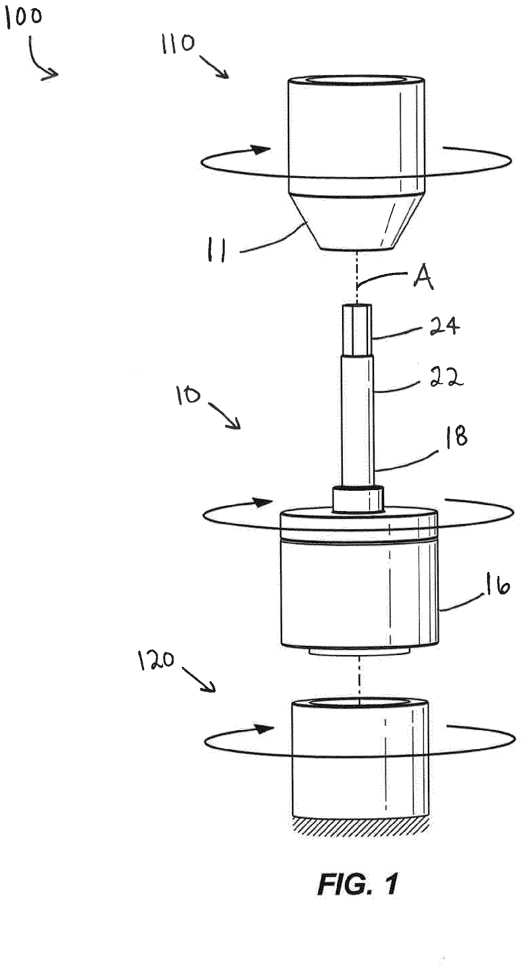

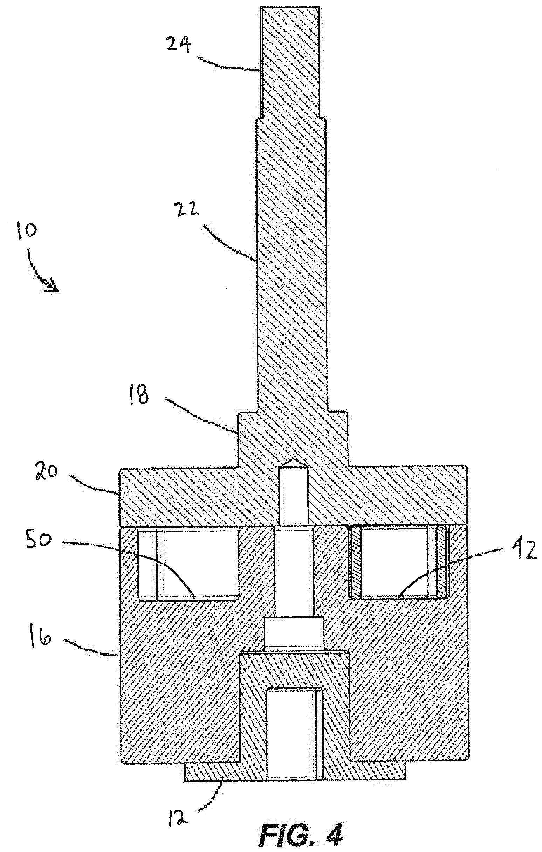

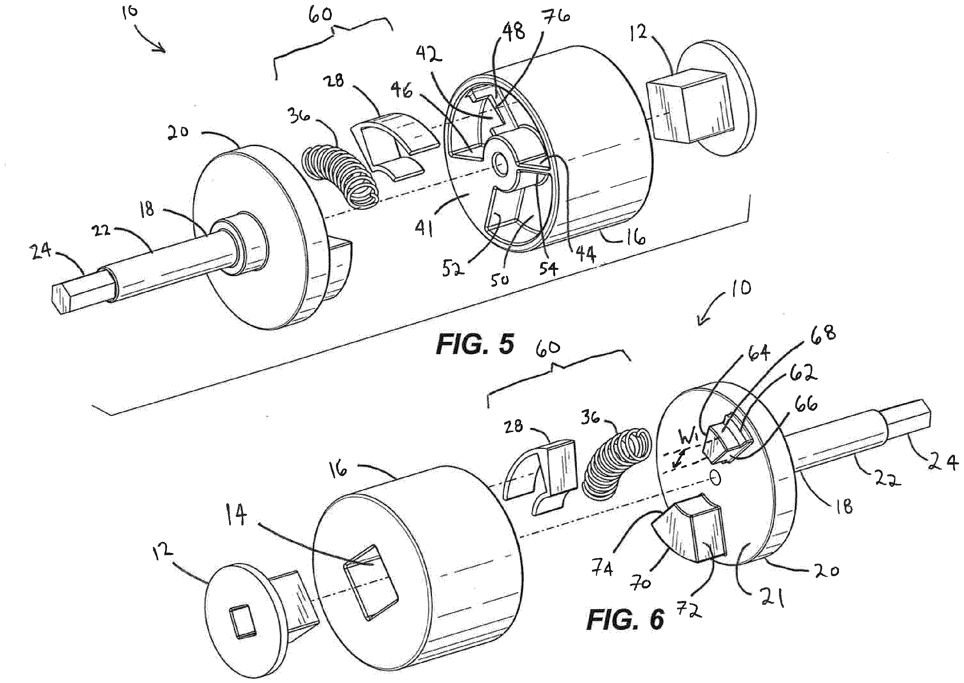

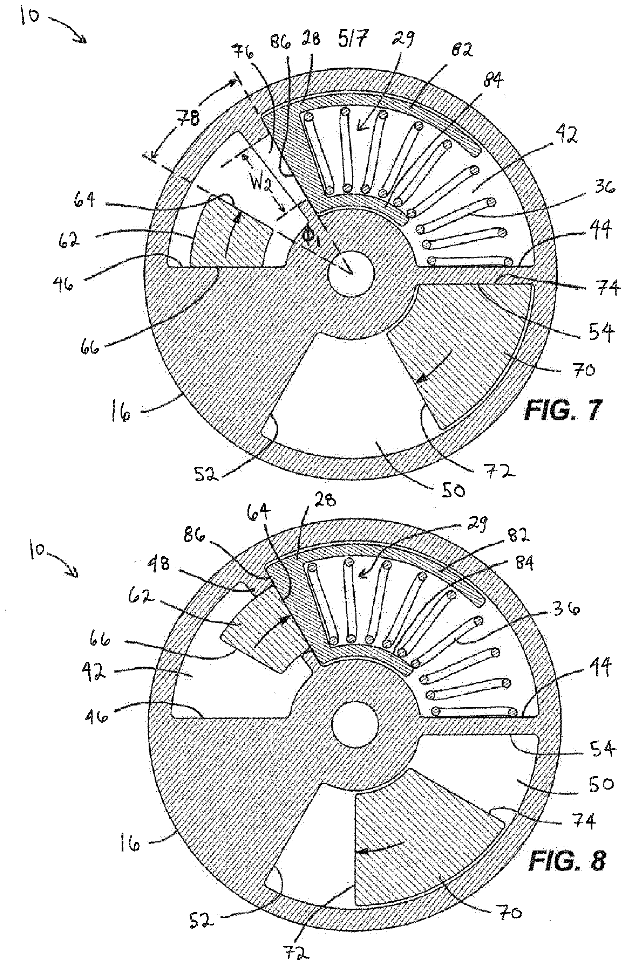

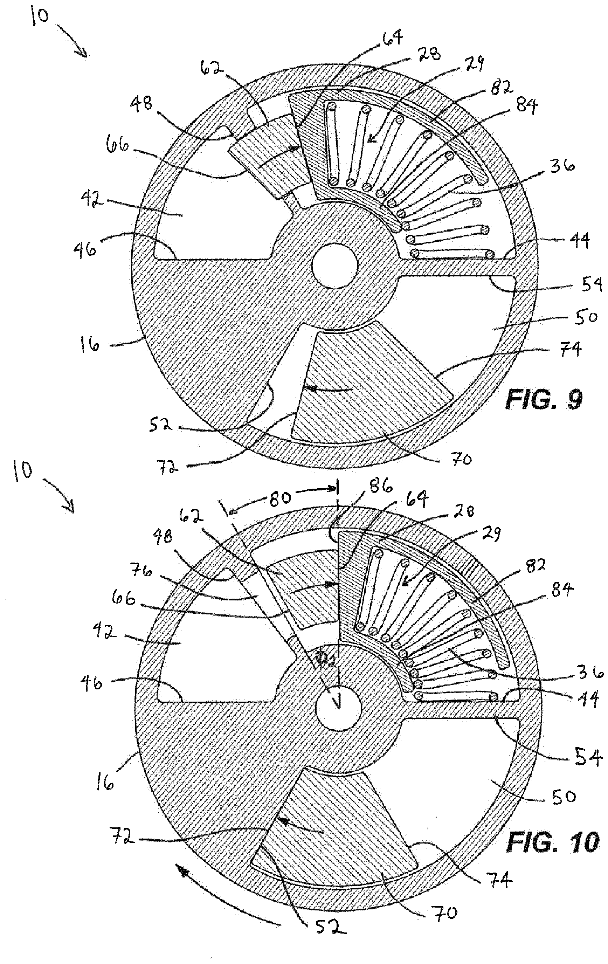

FIGS. 1-9 illustrate a torque adapter 10 useful to more accurately measure a maximum torque (i.e., a stall torque) of a rotary power source, such as a rotary power tool 110. The torque adapter 10 is operable between various rotational orientations, such as a first, starting orientation (FIG. 7), a second, intermediate orientation (FIG. 8), and a third, stalled orientation (FIGS. 9 and 10). The torque adapter 10 includes a cylindrical housing 16 and a mandrel 18 having a spindle portion 22 defining a rotational axis A (FIG. 1). The mandrel 18 is selectively rotatable relative to the housing 16 about the rotational axis A through the various orientations, as described in more detail below. A forward direction of rotation of the mandrel 18 relative to the housing 16 is defined by rotation of the mandrel 18 about the axis A from the starting orientation (FIG. 7) toward the stalled orientation (FIGS. 9 and 10). The torque adapter 10 further includes a resistance subassembly 60 (FIG. 5) within the housing 16.

FIG. 1 illustrates a torque measurement system 100 that includes the torque adapter 10 positioned between a torque output spindle or chuck 11 of the rotary power tool 110 and a torque transducer 120. The torque transducer 120 is rotationally grounded and configured to measure the torque generated by the rotary power tool 110 via the torque adapter 10. The chuck 11 can be associated with the rotary power tool 110 and attachable to the spindle portion 22 of the mandrel 18 so as to be rotatably fixed thereto during operation of the torque measurement system 100. Similarly, the housing 16 includes a first connector (e.g., a female square output recess 14) (FIG. 5) selectively attachable to a second connector (not shown) (e.g., a male square input member) to rotatably fix the housing 16 to the input of the torque transducer 120.

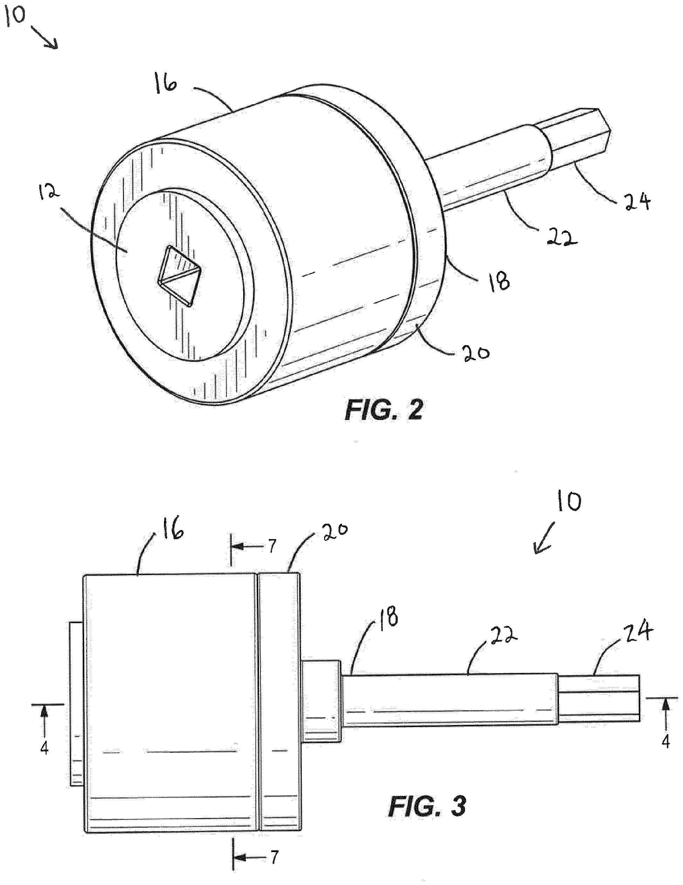

With reference to FIGS. 2-6, the spindle portion 22 of the mandrel 18 includes a hexagonal shank 24 disposed at a distal end of the spindle portion 22 and receivable in the chuck 11 (FIG. 1). A flange portion 20 extends radially outward from a proximal end of the mandrel 18 and defines a first mating surface 21 (FIG. 6).

As best shown in FIG. 6, the mandrel 18 is provided with a first arcuate protrusion 62 projecting axially from the first mating surface 21 and extending at least partially about the circumference of a circle. The first arcuate protrusion 62 includes a first protrusion front wall 64 facing in the forward direction of rotation of the mandrel 18 relative to the housing 16, and a first protrusion back wall 66 opposite the first protrusion front wall 64. In the present construction, the first arcuate protrusion further includes a narrow portion 68 characterized by a decreased radial width W1. The mandrel 18 is further provided with a second arcuate protrusion 70 projecting axially from the first mating surface 21 and extending at least partially about the circumference of a circle. The second arcuate protrusion 70 includes a second protrusion front wall 72 facing in the forward direction of rotation of the mandrel 18 relative to the housing 16, and a second protrusion back wall 74 opposite the second protrusion front wall 72. In the present construction, the first and second arcuate protrusions 62, 70 are rotationally offset by approximately half of a revolution (i.e., 180 degrees) and extend about approximately the same circumference of a circle. In other constructions, the first and second arcuate protrusions 62, 70 can be rotationally offset by less than half of a revolution (e.g., 175 degrees, 160 degrees, 145 degrees, etc.), and can extend about different circumferences.

Referring back to FIG. 5, the housing 16 is provided with a second mating surface 41 located at a proximal end of the housing 16 and configured to mate with the first mating surface 21 of the mandrel 18. A first arcuate recess 42 is disposed in the second mating surface 41 and extends at least partially about a circumference of a circle. The first arcuate recess 42 includes a first recess front wall 44 located at a furthermost end of the first arcuate recess 42 in the direction of rotation, and a first recess back wall 46 opposite the first recess front wall 44. Similarly, a second arcuate recess 50 is disposed in the second mating surface 41 and extends at least partially about a circumference of a circle. The second arcuate recess 50 includes a second recess front wall 52 located at a furthermost end of the second arcuate recess 50 in the direction of rotation, and a second recess back wall 54 opposite the second recess front wall 52. In the present construction, the first and second arcuate recesses 42, 50 are rotationally offset by approximately half of a revolution (i.e., 180 degrees), and extend about approximately the same circumference of a circle. In other constructions, the first and second arcuate recesses 42, 50 can be rotationally offset by less than half of a revolution (e.g., 175 degrees, 160 degrees, 145 degrees, etc.), and can extend about different circumferences.

The housing 16 is further provided with an intermediate wall 48 disposed within the first arcuate recess 42 and dividing the first arcuate recess 42 into a first rotational zone 78 (FIG. 7) and a second rotational zone 80 (FIG. 10). The second rotational zone 80 receives the resistance subassembly 60, which includes a slider 28 and a biasing member (e.g., a coil spring 36). The slider 28 includes arcuate slider sidewalls 82, 84 and a slider front wall 86 (FIG. 7). The spring 36 resides at least partially within a cavity 29 formed by slider sidewalls 82, 84 and the slider front wall 86, and biases the slider 28 toward the intermediate wall 48.

When the slider front wall 86 is in contact with the intermediate wall 48, the slider front wall 86 defines a forward boundary (i.e., with respect to the forward direction of rotation) of the first rotational zone 78. Likewise, when the slider front wall 86 is in contact with the intermediate wall 48, the slider front wall 86 further defines a rearward boundary of the second rotational zone 80.

When the mandrel 18 is coupled to the housing 16, the first mating surface 21 aligns with and abuts the second mating surface 41. The first arcuate recess 42 receives the first arcuate protrusion 62 and the second arcuate recess 50 receives the second arcuate protrusion 70. As best shown in FIG. 5, the intermediate wall 48 further includes a cutout or slot 76 having a radial width W2 (FIG. 7) nominally greater than the radial width W1 of the narrow portion 68 of the first arcuate protrusion 62. As will be discussed further below, when the mandrel 18 is rotated relative to the housing 16, the narrow portion 68 permits the first arcuate protrusion 62 to pass from the first rotational zone 78 through the intermediate wall 48 and into the second rotational zone 80.

Referring back to FIG. 6, the housing 16 further includes the female square output recess 14 formed in a distal end of the housing 14 and configured to receive the male square input member (not shown) of the torque transducer 120 (FIG. 1). The output recess 14 can be of a standard square drive size (e.g., 6.4 mm [1/4"], 9.5 mm [3/8"], 13 mm [1/2"], 19 mm [3/4"], etc.). In the present construction, the torque adapter 10 further includes an adapter 12 receivable into the output recess 14 and configured to adapt the size of the square drive connection (e.g., from 19 mm [3/4"] to 13 mm [1/2"], etc.) to suit variously sized input members.

In operation, to measure the stall torque of a rotary power source (e.g., the rotary power tool 110), the torque adapter 10 is positioned between the rotary power tool 110 and the torque transducer 120 according to the arrangement of FIG. 1. The shank 24 is rotatably locked to the chuck 11 of the rotary power tool 110, and the output recess 14 of the housing 16 receives the input member (not shown) of the torque transducer 120 to rotatably lock the housing 16 to the input of the torque transducer 120. The mandrel 18 is set at a starting rotational orientation relative to the housing 16 as shown in FIG. 7. At the starting orientation, the first protrusion back wall 66 abuts the first recess back wall 46, and the second protrusion back wall 74 abuts the second recess back wall 54. The spring 36 biases the slider 28 toward the intermediate wall 48 such that the slider front wall 86 abuts the intermediate wall 48.

With the torque adapter 10 in position and set to the starting orientation, the rotary power tool 110 begins supplying a torque to the torque adapter 10, which causes the mandrel 18 to begin rotating relative to the housing 16. The torque transducer 120 begins measuring the torque supplied by the torque adapter 10 at continuous intervals. The first arcuate protrusion 62 begins advancing from the starting orientation through the first rotational zone 78, through which the mandrel 18 faces only nominal rotational resistance (e.g., nominal frictional resistance between the mating surfaces 21, 41 of the flange 20 and housing 16, respectively). While the first arcuate protrusion 62 passes through the first rotational zone 78, the chuck 11 and the mandrel 18 angularly accelerate. The lack of significant rotational resistance through the first rotational zone 78 allows the rotary power tool 110 to initially overcome internal sources of rotational resistance (e.g., friction losses in an electric motor, a drivetrain assembly, etc.) before stall occurs and the stall torque is measured. Accelerating the chuck 11 and the mandrel 18 through the first rotational zone 78 prior to stalling the rotary power tool 110 provides a more accurate measurement of the stall torque.

With reference to FIG. 8, the mandrel 18 rotates through the first rotational zone 78 until it reaches an intermediate orientation where the first protrusion front wall 64 contacts the slider front wall 86. In the present construction, the first rotational zone 78 provides approximately 30 degrees of rotation of the mandrel 18 relative to the housing 16, indicated by angle φ1 in FIG. 7. In other constructions, the first rotational zone 78 may provide an angle φ1 of approximately 10 degrees, 15 degrees, 20 degrees, 25 degrees, 35 degrees, 40 degrees, 45 degrees, 50 degrees, 60 degrees, 75 degrees, or 90 degrees, depending on the sizes and dimensions of the first and second protrusions 62, 70, and the first and second recesses 42, 50.

After reaching the intermediate orientation, the mandrel 18 begins to encounter increasing rotational resistance as it rotates relative to the housing 16 through the second rotational zone 80. The first protrusion front wall 64 presses against the slider front wall 86 and compresses the spring 36. As the spring 36 compresses, it exerts an increasing amount of resistive force against the first arcuate protrusion 62 via the slider 28. The resistive force of the biasing member 36 slows the angular acceleration of the mandrel 18 and causes the mandrel 18 to decelerate relative to the housing 16.

Eventually the resistive force exerted by the biasing member 36 matches the torque provided by the rotary power tool 110, and a final "stalled" orientation is reached at which the chuck 11 and the mandrel 18 cease rotation relative to the housing 16. When the stalled orientation is reached, the torque measured by the torque transducer 120 is a stall torque of the rotary power tool 110. By rotating the mandrel 18 through the angles φ1 and φ2 before stopping at the stalled orientation, the rotary power tool 110 overcomes the internal static frictional forces associated with an initial "startup" before supplying the stall torque measured by the torque transducer 120. This provides for a more accurate measurement of the stall torque of the rotary power tool 110.

In some applications, as shown in FIG. 9, the stall torque of a particular rotary power tool 110 may be less than the resistive force exerted by the spring 36, so that the stalled orientation is reached before the second protrusion front wall 72 contacts the second recess front wall 52. In other applications, as shown in FIG. 10, the stall torque of a particular rotary power tool 110 may be equal to or greater than the resistive force exerted by the spring 36, so that the stalled orientation is reached when the second protrusion front wall 72 contacts the second recess front wall 52. In the present construction, the second rotational zone 80, indicated by angle φ2 in FIG. 10, provides a maximum of approximately 30 degrees of rotation of the mandrel 18 relative to the housing 16 through which the first protrusion 62 compresses spring 36. In other constructions, the second rotational zone 80 may provide a maximum angle φ2 of approximately 10 degrees, 15 degrees, 20 degrees, 25 degrees, 35 degrees, 40 degrees, 45 degrees, 50 degrees, 60 degrees, 75 degrees, or 90 degrees, depending on the sizes and dimensions of the first and second protrusions 62, 70, and the first and second recesses 42, 50.

FIG. 10 illustrates a method 1000 of measuring a stall torque of a rotary power tool 110 using the torque adapter 10. As shown at step 1002, the torque adapter 10 is initially positioned and coupled between the rotary power tool 110 and the torque transducer 120. Next, at step 1004, the torque adapter 10 is set at a starting orientation whereat the first protrusion back wall 66 of the mandrel 18 abuts the first recess back wall 46 of the housing 16. At step 1006, the rotary power tool 110 is activated to begin supplying a torque to the mandrel 18. At step 1008, the mandrel 18 is rotated relative to the housing 16 through the first rotational zone 78 while facing nominal rotational resistance. At step 1010, the mandrel 18 is next rotated through the second rotational zone 80 while facing increased rotational resistance, due to the resistive force exerted by the spring 36. At step 1012, rotation of the mandrel 18 is stalled when the rotational resistance reaches an equivalent of the torque supplied by the rotary power tool 110. Finally, at step 1014, a stall torque value is measured by the torque transducer 120 while the rotary power source 110 is stalled.

Various features of the invention are set forth in the following claims.

## Claims

1. A torque adapter (10) for measuring a stall torque supplied by a rotary power source (110), the torque adapter (10) comprising:
a housing (16) including an arcuate recess (42) defined at least partly by a recess front wall (44) and a recess back wall (46), the arcuate recess (42) having a first rotational zone (78) bounded on one side by the recess back wall (46), and a second rotational zone (80) bounded on an opposite side from the first rotational zone (78) by the recess front wall (44);
a mandrel (18) rotatable relative to the housing (16) and having a flange portion (20), the flange portion (20) including an arcuate protrusion (62) received in the arcuate recess (42);
a resistance subassembly (60) including a biasing member (36) received in the arcuate recess (42);
wherein the resistance subassembly is configured so that when the mandrel (18) is rotated relative to the housing (16), the mandrel (18) encounters nominal rotational resistance while the arcuate protrusion (62) passes through the first rotational zone (78), and wherein the mandrel (18) encounters increasing rotational resistance while the arcuate protrusion (62) passes through the second rotational zone (80).

2. The torque adapter (10) of claim 1, wherein the arcuate recess (42) extends at least partially about a circumference of a circle, and wherein the arcuate protrusion (62) extends at least partially about a circumference of a circle.

3. The torque adapter (10) of claim 1 or 2, wherein the housing (16) further includes an intermediate wall (48) disposed in the arcuate recess (42) between the recess front wall (44) and the recess back wall (46).

4. The torque adapter (10) of claim 3, wherein the arcuate protrusion (62) includes a narrow portion (68) and the intermediate wall (48) includes a slot (76) that permits the narrow portion (68) to pass by the intermediate wall (48) when the mandrel (18) is rotated relative to the housing (16).

5. The torque adapter (10) of claim 4, wherein the intermediate wall (48) divides the first rotational zone (78) from the second rotational zone (80), and the resistance subassembly (60) is disposed in the second rotational zone (80).

6. The torque adapter (10) of any of claims 3 to 5, wherein the resistance subassembly (60) includes a slider (28) having a slider front wall (86), and when the arcuate protrusion (62) is located in the first rotational zone (78), the slider front wall (86) abuts the intermediate wall (48).

7. The torque adapter (10) of claim 6, wherein the biasing member (36) biases the slider (28) toward the recess back wall (46); or
the slider (28) includes a first arcuate sidewall (82) and a second arcuate sidewall (84), and the biasing member (36) resides at least partially within a cavity (29) defined by the first and second arcuate sidewalls (82, 84) and the slider front wall (86).

8. The torque adapter (10) of any preceding claim, wherein the resistance subassembly (60) causes the increasing rotational resistance by exerting an increasing resistive force against the arcuate protrusion (62) when the arcuate protrusion (62) passes through the second rotational zone (80).

9. The torque adapter (10) of any preceding claim, wherein the arcuate protrusion (62) includes a protrusion front wall (64) and a protrusion back wall (66), and wherein when the arcuate protrusion (62) passes through the first rotational zone (78) from a starting orientation at which the protrusion back wall (66) abuts the recess back wall (46), the mandrel (18) rotates at least fifteen degrees relative to the housing (16) before contact with the resistance subassembly (60), and optionally: when the arcuate protrusion (62) passes through the second rotational zone (80), the mandrel (18) is capable of rotating a maximum of at least fifteen degrees relative to the housing (16) while encountering increasing rotational resistance provided by the resistance subassembly (60).

10. The torque adapter (10) of any preceding claim, wherein the housing (16) further includes a first connector (14) disposed in the housing (16) and operable to mate with a corresponding second connector on a torque transducer (120) to rotationally lock the housing (16) to the torque transducer (120), and optionally further including an adapter (12) configured to adapt the size of the first connector (14) to the size of the second connector.

11. The torque adapter (10) of any preceding claim, wherein the arcuate recess (42) is a first arcuate recess, the recess front wall (44) is a first recess front wall, and the recess back wall (46) is a first recess back wall, and the arcuate protrusion (62) is a first arcuate protrusion having a first protrusion front wall (64) and a first protrusion back wall (66); and
wherein the housing (16) further includes a second arcuate recess (50) having a second recess front wall (52) and a second recess back wall (54), and the mandrel (18) further includes a second arcuate protrusion (70) positioned in the second arcuate recess (50), the second arcuate protrusion (70) having a second protrusion front wall (72) and a second protrusion back wall (74).

12. The torque adapter (10) of claim 11, wherein the mandrel (18) is configurable in a starting orientation relative to the housing (16), and wherein in the starting orientation, the first protrusion back wall (66) abuts the first recess back wall (46), and the second protrusion back wall (74) abuts the second recess back wall (54).

13. The torque adapter (10) of claim 12, wherein the mandrel (18) is further configurable in a stalled orientation relative to the housing (16), and wherein in the stalled orientation,
a rotational resistance caused by a resistive force exerted by the biasing member (36) is equal to the stall torque supplied by the rotary power source (110), such that the second protrusion front wall (72) does not contact the second recess front wall (52); or
a rotational resistance caused by a resistive force exerted by the biasing member (36) is less than the stall torque supplied by the rotary power source (110), such that the second protrusion front wall (72) contacts and abuts the second recess front wall (52), and optionally: wherein the resistance subassembly (60) includes a slider (28) having a slider front wall (86), and the mandrel (18) is further configurable in an intermediate orientation relative to the housing (16), wherein in the intermediate orientation, the slider front wall (86) abuts both of the first protrusion front wall (64) and the intermediate wall (48).

14. The torque adapter (10) of any preceding claim, wherein the mandrel (18) further includes a spindle portion (22) adjacent the flange portion (20), and a hexagonal shank (24) at a distal end of the spindle portion (22).

15. A method of measuring a stall torque supplied by a rotary power source (110) using a torque adapter (10) and a torque transducer (120), the torque adapter (10) having a mandrel (18) and a housing (16), the mandrel (18) being coupled to the rotary power source (110), and the housing (16) being rotationally fixed to the torque transducer (120), the method comprising:
activating the rotary power source (110) to supply a torque to the mandrel (18);
rotating the mandrel (18) relative to the housing (16) through a first rotational zone (78) of nominal rotational resistance;
rotating the mandrel (18) relative to the housing (16) through a second rotational zone (80) of increasing rotational resistance;
stalling rotation of the mandrel (18) when the rotational resistance becomes equal to the torque supplied by the rotary power source (110); and
measuring the stall torque of the rotary power source (110) with the torque transducer (120); optionally the method further comprises:
before activating the rotary power source (110), setting the torque adapter (10) at a starting orientation at which a back wall (66) of a first arcuate protrusion (62) of the mandrel (18) abuts a back wall (46) of a first arcuate recess (42) of the housing (16).

## Patentansprüche

1. Drehmomentadapter (10) zum Messen eines Stillstandsmoments, das durch eine Drehantriebsquelle (110) bereitgestellt wird, wobei der Drehmomentadapter (10) Folgendes umfasst:
ein Gehäuse (16), das eine bogenförmige Aussparung (42) einschließt, die wenigstens teilweise durch eine vordere Aussparungswand (44) und eine hintere Aussparungswand (46) definiert wird, wobei die bogenförmige Aussparung (42) eine erste Drehzone (78), die auf einer Seite durch die hintere Aussparungswand (46) begrenzt wird, und eine zweite Drehzone (80), die auf einer der ersten Drehzone (78) gegenüberliegenden Seite durch die vordere Aussparungswand (44) begrenzt wird, aufweist,
einen Dorn (18), der im Verhältnis zu dem Gehäuse (16) drehbar ist und einen Flanschabschnitt (20) aufweist, wobei der Flanschabschnitt (20) einen bogenförmigen Vorsprung (62) einschließt, der in der bogenförmigen Aussparung (42) aufgenommen wird,
eine Widerstandsunterbaugruppe (60), die ein Vorspannelement (36) einschließt, das in der bogenförmigen Aussparung (42) aufgenommen wird,
wobei die Widerstandsunterbaugruppe so konfiguriert ist, dass, wenn der Dorn (18) im Verhältnis zu dem Gehäuse (16) gedreht wird, der Dorn (18) auf einen Nenndrehwiderstand trifft, während der bogenförmige Vorsprung (62) durch die erste Drehzone (78) hindurchgeht, und wobei der Dorn (18) auf einen zunehmenden Drehwiderstand trifft, während der bogenförmige Vorsprung (62) durch die zweite Drehzone (80) hindurchgeht.

2. Drehmomentadapter (10) nach Anspruch 1, wobei sich die bogenförmige Aussparung (42) wenigstens teilweise um einen Umfang eines Kreises erstreckt und wobei sich der bogenförmige Vorsprung (62) wenigstens teilweise um einen Umfang eines Kreises erstreckt.

3. Drehmomentadapter (10) nach Anspruch 1 oder 2, wobei das Gehäuse (16) ferner eine Zwischenwand (48) einschließt, die in der bogenförmigen Aussparung (42) zwischen der vorderen Aussparungswand (44) und der hinteren Aussparungswand (46) angeordnet ist.

4. Drehmomentadapter (10) nach Anspruch 3, wobei der bogenförmige Vorsprung (62) einen schmalen Abschnitt (68) einschließt und die Zwischenwand (48) einen Schlitz (76) einschließt, der es ermöglicht, dass der schmale Abschnitt (68) an der Zwischenwand (48) vorbeigeht, wenn der Dorn (18) im Verhältnis zu dem Gehäuse (16) gedreht wird.

5. Drehmomentadapter (10) nach Anspruch 4, wobei die Zwischenwand (48) die erste Drehzone (78) von der zweiten Drehzone (80) trennt und die Widerstandsunterbaugruppe (60) in der zweiten Drehzone (80) angeordnet ist.

6. Drehmomentadapter (10) nach einem der Ansprüche 3 bis 5, wobei die Widerstandsunterbaugruppe (60) ein Gleitstück (28) einschließt, das eine vordere Gleitstückwand (86) aufweist, und wenn der bogenförmige Vorsprung (62) in der ersten Drehzone (78) angeordnet ist, die vordere Gleitstückwand (86) an die Zwischenwand (48) anstößt.

7. Drehmomentadapter (10) nach Anspruch 6, wobei das Vorspannelement (36) das Gleitstück (28) hin zu der hinteren Aussparungswand (46) vorspannt oder
das Gleitstück (28) eine erste bogenförmige Seitenwand (82) und eine zweite bogenförmige Seitenwand (84) einschließt und das Vorspannelement (36) wenigstens teilweise innerhalb eines Hohlraums (29) ruht, der durch die erste und die zweite bogenförmige Seitenwand (82, 84) und die vordere Gleitstückwand (86) definiert wird.

8. Drehmomentadapter (10) nach einem der vorhergehenden Ansprüche, wobei die Widerstandsunterbaugruppe (60) den zunehmenden Drehwiderstad durch Ausüben einer zunehmenden Widerstandskraft gegen den bogenförmigen Vorsprung (62) verursacht, wenn der bogenförmige Vorsprung (62) durch die zweite Drehzone (80) hindurchgeht.

9. Drehmomentadapter (10) nach einem der vorhergehenden Ansprüche, wobei der bogenförmige Vorsprung (62) eine vordere Vorsprungswand (64) und eine hintere Vorsprungswand (66) einschließt und wobei, wenn der bogenförmige Vorsprung (62) von einer Startausrichtung aus, bei der die hintere Vorsprungswand (66) an die hintere Aussparungswand (46) anstößt, durch die erste Drehzone (78) hindurchgeht, sich der Dorn (18) vor einer Berührung mit der Widerstandsunterbaugruppe (60) wenigstens fünfzehn Grad im Verhältnis zu dem Gehäuse (16) dreht und wahlweise: wenn der bogenförmige Vorsprung (62) durch die zweite Drehzone (80) hindurchgeht, der Dorn (18) dazu in der Lage ist, sich maximal wenigstens fünfzehn Grad im Verhältnis zu dem Gehäuse (16) zu drehen, während er auf zunehmenden Drehwiderstand trifft, der durch die Widerstandsunterbaugruppe (60) bereitgestellt wird.

10. Drehmomentadapter (10) nach einem der vorhergehenden Ansprüche, wobei das Gehäuse (16) ferner einen ersten Verbinder (14) einschließt, der in dem Gehäuse (16) angeordnet und funktionsfähig ist, um mit einem entsprechenden zweiten Verbinder an einem Drehmomentaufnehmer (120) zusammenzupassen, um das Gehäuse (16) drehend an dem Drehmomentaufnehmer (120) zu verriegeln, und wahlweise ferner einen Adapter (12) einschließt, der konfiguriert ist, um die Größe des ersten Verbinders (14) an die Größe des zweiten Verbinders anzupassen.

11. Drehmomentadapter (10) nach einem der vorhergehenden Ansprüche, wobei die bogenförmige Aussparung (42) eine erste bogenförmige Aussparung ist, die vordere Aussparungswand (44) eine erste vordere Aussparungswand ist und die hintere Aussparungswand (46) eine erste hintere Aussparungswand ist und der bogenförmige Vorsprung (62) ein erster bogenförmiger Vorsprung ist, der eine erste vordere Vorsprungswand (64) und eine erste hintere Vorsprungswand (66) aufweist, und
wobei das Gehäuse (16) ferner eine zweite bogenförmige Aussparung (50) einschließt, die eine zweite vordere Aussparungswand (52) und eine zweite hintere Aussparungswand (54) aufweist, und der Dorn (18) ferner einen zweiten bogenförmigen Vorsprung (70) einschließt, der in der zweiten bogenförmigen Aussparung (50) angeordnet ist, wobei der zweite bogenförmige Vorsprung (70) eine zweite vordere Vorsprungswand (72) und eine zweite hintere Vorsprungswand (74) aufweist.

12. Drehmomentadapter (10) nach Anspruch 11, wobei der Dorn (18) in einer Startausrichtung im Verhältnis zu dem Gehäuse (16) konfigurierbar ist und wobei in der Startausrichtung die erste hintere Vorsprungswand (66) an die erste hintere Aussparungswand (46) anstößt und die zweite hintere Vorsprungswand (74) an die zweite hintere Aussparungswand (54) anstößt.

13. Drehmomentadapter (10) nach Anspruch 12, wobei der Dorn (18) ferner in einer Stillstandsausrichtung im Verhältnis zu dem Gehäuse (16) konfigurierbar ist und wobei in der Stillstandsausrichtung
ein Drehwiderstand, der durch eine Widerstandskraft verursacht wird, die durch das Vorspannelement (36) ausgeübt wird, gleich dem Stillstandsmoment ist, das durch die Drehantriebsquelle (110) zugeführt wird, so dass die zweite vordere Vorsprungswand (72) nicht die zweite vordere Aussparungswand (52) berührt, oder
ein Drehwiderstand, der durch eine Widerstandskraft verursacht wird, die durch das Vorspannelement (36) ausgeübt wird, geringer ist als das Stillstandsmoment, das durch die Drehantriebsquelle (110) zugeführt wird, so dass die zweite vordere Vorsprungswand (72) die zweite vordere Aussparungswand (52) berührt und anstößt, und wahlweise: wobei die Widerstandsunterbaugruppe (60) ein Gleitstück (28) einschließt, das eine vordere Gleitstückwand (86) aufweist, und der Dorn (18) ferner in einer Zwischenausrichtung im Verhältnis zu dem Gehäuse (16) konfigurierbar ist, wobei in der Zwischenkonfiguration die vordere Gleitstückwand (86) an sowohl die erste vordere Vorsprungswand (64) als auch die Zwischenwand (48) anstößt.

14. Drehmomentadapter (10) nach einem der vorhergehenden Ansprüche, wobei der Dorn (18) ferner einen Spindelabschnitt (22) angrenzend an den Flanschabschnitt (20) und einen sechseckigen Schaft (24) an einem distalen Ende des Spindelabschnitts (22) einschließt.

15. Verfahren zum Messen eines Stillstandsmoments, das durch eine Drehantriebsquelle (110) bereitgestellt wird, unter Verwendung eines Drehmomentadapters (10) und eines Drehmomentaufnehmers (120), wobei der Drehmomentadapter (10) einen Dorn (18) und ein Gehäuse (16) aufweist, wobei der Dorn (18) mit der Drehantriebsquelle (110) verbunden ist und das Gehäuse (16) drehend an dem Drehmomentaufnehmer (120) befestigt ist, wobei das Verfahren Folgendes umfasst:
Aktivieren der Drehantriebsquelle (110), um dem Dorn (18) ein Drehmoment zuzuführen,
Drehen des Dorns (18) im Verhältnis zu dem Gehäuse (16) durch eine erste Drehzone (78) mit einem Nenndrehwiderstand,
Drehen des Dorns (18) im Verhältnis zu dem Gehäuse (16) durch eine zweite Drehzone (80) mit einem zunehmenden Drehwiderstand,
Anhalten der Drehung des Dorns (18), wenn der Drehwiderstand gleich dem Drehmoment ist, das durch die Drehantriebsquelle (110) zugeführt wird, und
Messen des Stillstandsmoments der Drehantriebsquelle (110) mit dem Drehmomentaufnehmer (120), wahlweise wobei das Verfahren Folgendes umfasst:
vor dem Aktivieren der Drehantriebsquelle (110) Stellen des Drehmomentadapters (10) auf eine Startausrichtung, bei der eine hintere Wand (66) eines ersten bogenförmigen Vorsprungs (62) des Dorns (18) an eine hintere Wand (46) einer ersten bogenförmigen Aussparung (42) des Gehäuses (16) anstößt.

## Revendications

1. Adaptateur de couple (10) pour mesurer un couple de décrochage fourni par une source d'énergie rotative (110), l'adaptateur de couple (10) comprenant :
un boîtier (16) incluant un évidement arqué (42) défini au moins en partie par une paroi avant de l'évidement (44) et une paroi arrière de l'évidement (46), l'évidement arqué (42) comportant une première zone rotative (78) délimitée sur un côté par la paroi arrière de l'évidement (46), et une deuxième zone rotative (80) délimitée sur un côté opposé à la première zone rotative (78) par la paroi avant de l'évidement (44) ;
un mandrin (18) pouvant tourner par rapport au boîtier (16) et comportant une partie de bride (20), la partie de bride (20) incluant une saillie arquée (62) reçue dans l'évidement arqué (42) ;
un sous-ensemble de résistance (60) incluant un élément de sollicitation (36) reçu dans l'évidement arqué (42) ;
dans lequel le sous-ensemble de résistance est configuré de sorte que lorsque le mandrin (18) est tourné par rapport au boîtier (16), le mandrin (18) rencontre une résistance nominale à la rotation pendant que la saillie arquée (62) passe à travers la première zone de rotation (78), et dans lequel le mandrin (18) rencontre une résistance à la rotation accrue pendant que la saillie arquée (62) passe à travers la deuxième zone de rotation (80).

2. Adaptateur de couple (10) selon la revendication 1, dans lequel l'évidement arqué (42) s'étend au moins en partie autour d'une circonférence d'un cercle, et dans lequel la saillie arquée (62) s'étend au moins en partie autour d'une circonférence d'un cercle.

3. Adaptateur de couple (10) selon les revendications 1 ou 2, dans lequel le boîtier (16) inclut en outre une paroi intermédiaire (48) disposée dans l'évidement arqué (42) entre la paroi avant de l'évidement (44) et la paroi arrière de l'évidement (46).

4. Adaptateur de couple (10) selon la revendication 3, dans lequel la saillie arquée (62) inclut une partie étroite (68) et la paroi intermédiaire (48) inclut une fente (76) permettant le passage de la partie étroite (68) par la paroi intermédiaire (48) lorsque le mandrin (18) est tourné par rapport au boîtier (16).

5. Adaptateur de couple (10) selon la revendication 4, dans lequel la paroi intermédiaire (48) sépare la première zone rotative (78) de la deuxième zone rotative (80), le sous-ensemble de résistance (60) étant disposé dans la deuxième zone rotative (80).

6. Adaptateur de couple (10) selon l'une quelconque des revendications 3 à 5, dans lequel le sous-ensemble de résistance (60) inclut un coulisseau (28) comportant une paroi avant de coulisseau (86), et lorsque la saillie arquée (62) est située dans la première zone de rotation (78), la paroi avant du coulisseau (86) bute contre la paroi intermédiaire (48).

7. Adaptateur de couple (10) selon la revendication 6, dans lequel l'élément de sollicitation (36) sollicite le coulisseau (28) vers la paroi arrière du coulisseau (46) ; ou
le coulisseau (28) inclut une première paroi latérale arquée (82) et une deuxième paroi latérale arquée (84), l'élément de sollicitation (36) étant logé au moins en partie dans une cavité (29) définie par les première et deuxième parois latérales arquées (82, 84) et la paroi avant du coulisseau (86).

8. Adaptateur de couple (10) selon l'une quelconque des revendications précédentes, dans lequel le sous-ensemble de résistance (60) entraîne la résistance accrue à la rotation en exerçant une force de résistance accrue contre la saillie arquée (62) lorsque la saillie arquée (62) passe à travers la deuxième zone rotative (80).

9. Adaptateur de couple (10) selon l'une quelconque des revendications précédentes, dans lequel la saillie arquée (62) inclut une paroi avant de saillie (64) et une paroi arrière de saillie (60), et dans lequel, lorsque la saillie arquée (62) passe à travers la première zone rotative (78) à partir d'une orientation de départ, dans laquelle la paroi arrière de la saillie (66) bute contre la paroi arrière de l'évidement (46), le mandrin (18) tourne au moins de quinze degrés par rapport au boîtier (16) avant de contacter le sous-ensemble de résistance (60), et dans lequel, optionnellement : lorsque la saillie arquée (62) passe à travers la deuxième zone rotative (80), le mandrin (18) est capable de tourner au maximum d'au moins quinze degrés par rapport au boîtier (16) pendant qu'il rencontre une résistance accrue à la rotation fournie par le sous-ensemble de résistance (60).

10. Adaptateur de couple (10) selon l'une quelconque des revendications précédentes, dans lequel le boîtier (16) inclut en outre un premier connecteur (14) disposé dans le boîtier (16) et utilisable pour être accouplé à un deuxième connecteur correspondant sur un transducteur de couple (120) pour verrouiller par rotation le boîtier (16) sur le transducteur de couple (120), et incluant optionnellement en outre un adaptateur (12) configuré pour adapter la taille du premier connecteur (14) à la taille du deuxième connecteur.

11. Adaptateur de couple (10) selon l'une quelconque des revendications précédentes, dans lequel l'évidement arqué (42) constitue un premier évidement arqué, la paroi avant de l'évidement (44) constituant une première paroi avant de l'évidement, et la paroi arrière de l'évidement (46) constituant une première paroi arrière de l'évidement et la saillie arquée (62) constituant une première saillie arquée comportant une première paroi avant de saillie (64) et une première paroi arrière de saillie (66) ; et
dans lequel le boîtier (16) inclut en outre un deuxième évidement arqué (50) comportant une deuxième paroi d'évidement (52) et une deuxième paroi arrière d'évidement (54) et le mandrin (18) inclut en outre une deuxième saillie arquée (70) positionnée dans le deuxième évidement arqué (50), la deuxième saillie arquée (70) comportant une deuxième paroi avant de saillie (72) et une deuxième paroi arrière de saillie (74).

12. Adaptateur de couple (10) selon la revendication 11, dans lequel le mandrin (18) peut être configuré dans une orientation de départ par rapport au boîtier (16), et dans lequel, dans l'orientation de départ, la première paroi arrière de la saillie (66) bute contre la première paroi arrière de l'évidement (46), la deuxième paroi arrière de la saillie (74) butant contre la deuxième paroi arrière de l'évidement (54).

13. Adaptateur de couple (10) selon la revendication 12, dans lequel le mandrin (18) peut en outre être configuré dans une orientation de décrochage par rapport au boîtier (16), et dans lequel, dans l'orientation de décrochage ;
une résistance à la rotation entrainée par une force de résistance exercée par l'élément de sollicitation (36) est égale au couple de décrochage fourni par la source d'énergie rotative (110), de sorte que la deuxième paroi avant de la saillie (72) ne contacte pas la deuxième paroi avant de l'évidement (52) ; ou
une résistance à la rotation entraînée par une force de résistance exercée par l'élément de sollicitation (36) est inférieure au couple de décrochage fourni par la source d'énergie rotative (110), de sorte que la deuxième paroi avant de la saillie (72) contacte la deuxième paroi avant de l'évidement (52) et bute contre celle-ci, et optionnellement : dans lequel le sous-ensemble de résistance (60) inclut un coulisseau (28) comportant une paroi avant de coulisseau (86) et le mandrin (18) pouvant en outre être configuré dans une orientation intermédiaire par rapport au boîtier (16), dans lequel, dans l'orientation intermédiaire, la paroi avant du coulisseau (86) bute contre la première paroi avant de la saillie (64) et la paroi intermédiaire (48).

14. Adaptateur de couple (10) selon l'une quelconque des revendications précédentes, dans lequel le mandrin (18) inclut en outre une partie de broche (22) adjacente à la partie de bride (20), et une tige hexagonale (24) au niveau d'une extrémité distale de la partie de broche (22).

15. Procédé de mesure d'un couple de décrochage fourni par une source d'énergie rotative (110) en utilisant un adaptateur de couple (10) et un transducteur de couple (120), l'adaptateur de couple (10) comportant un mandrin (18) et un boîtier (16), le mandrin (18) étant accouplé à la source d'énergie rotative (110) et le boîtier (16) étant fixé de manière rotative sur le transducteur de couple (120), le procédé comprenant les étapes ci-dessous :
activation de la source d'énergie rotative (110) pour fournir un couple au mandrin (18);
rotation du mandrin (18) par rapport au boîtier (16) à travers une première zone rotative (78) à résistance nominale à la rotation ;
rotation du mandrin (18) par rapport au boîtier (16) à travers une deuxième zone rotative (80) à résistance accrue à la rotation.
arrêt de la rotation du mandrin (18) lorsque la résistance à la rotation est égale au couple fourni par la source d'énergie rotative (110) ; et
mesure du couple de décrochage de la source d'énergie rotative (110) avec le transducteur de couple (120), le procédé comprenant optionnellement l'étape ci-dessous :
avant l'activation de la source d'énergie rotative (110) ajustement de l'adaptateur de couple (10) dans une orientation de départ, dans laquelle une paroi arrière (66) d'une première saillie arquée (62) du mandrin (18) bute contre une paroi arrière (46) d'un premier évidement arqué (42) du boîtier (16).
